(19) Europäisches Patentamt
European Patent Office
Office européen des brevets

(11) **EP 3 428 225 B1**

(12) **EUROPÄISCHE PATENTSCHRIFT**

(45) Veröffentlichungstag und Bekanntmachung des Hinweises auf die Patenterteilung:
**17.07.2024 Patentblatt 2024/29**

(21) Anmeldenummer: **18171982.4**

(22) Anmeldetag: **14.05.2018**

(51) Internationale Patentklassifikation (IPC):
**C08K 3/30** *(2006.01)* **C08K 3/36** *(2006.01)*
**C08K 5/00** *(2006.01)* **C08K 5/31** *(2006.01)*
**C08K 5/44** *(2006.01)* **C08K 5/548** *(2006.01)*

(52) Gemeinsame Patentklassifikation (CPC):
(C-Sets verfügbar)
**C08K 5/548; C08K 3/30; C08K 3/36; C08K 5/0016; C08K 5/31; C08K 5/44** (Forts.)

(54) **SCHWEFELVERNETZTE KAUTSCHUKMISCHUNG UND FAHRZEUGREIFEN**

SULPHUR LINKABLE NATURAL RUBBER MIXTURE AND VEHICLE TYRE

MÉLANGE DE CAOUTCHOUC RÉTICULÉ PAR VULCANISATION AU SOUFRE ET PNEUS DE VÉHICULE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **13.07.2017 DE 102017212032**

(43) Veröffentlichungstag der Anmeldung:
**16.01.2019 Patentblatt 2019/03**

(73) Patentinhaber: **Continental Reifen Deutschland GmbH**
**30175 Hannover (DE)**

(72) Erfinder: **Weber, Christian**
**30826 Garbsen (DE)**

(74) Vertreter: **Continental Corporation**
**c/o Continental AG**
**Intellectual Property**
**Postfach 169**
**30001 Hannover (DE)**

(56) Entgegenhaltungen:
**DE-A1- 102014 215 865 DE-A1- 102015 210 424**

(52) Gemeinsame Patentklassifikation (CPC): (Forts.)

C-Sets
**C08K 3/30, C08L 7/00;**
**C08K 3/36, C08L 7/00;**
**C08K 5/0016, C08L 7/00;**
**C08K 5/31, C08L 7/00;**
**C08K 5/44, C08L 7/00;**
**C08K 5/548, C08L 7/00**

**Beschreibung**

Die Erfindung betrifft eine schwefelvernetzte Kautschukmischung, insbesondere für die Base von Laufstreifen mit CapBase-Konstruktion von Fahrzeugreifen, und einen Fahrzeugreifen.

Da die Fahreigenschaften eines Fahrzeugreifens, insbesondere eines Fahrzeugluftreifens, in einem großen Umfang von der Kautschukzusammensetzung des Laufstreifens abhängig sind, werden besonders hohe Anforderungen an die Zusammensetzung der Laufstreifenmischung gestellt. Durch den teilweisen oder vollständigen Ersatz des Füllstoffes Ruß durch Kieselsäure in Kautschukmischungen wurden die Fahreigenschaften in den vergangenen Jahren insgesamt auf ein höheres Niveau gebracht. Die bekannten Zielkonflikte der sich gegensätzlich verhaltenden Reifeneigenschaften bestehen allerdings auch bei kieselsäurehaltigen Laufstreifenmischungen weiterhin. Hierbei bestehen nicht nur bei dem mit der Fahrbahn in Berührung kommenden Teil des Laufstreifens (Cap) Zielkonflikte, sondern auch bei der Base, welche über das gesamte Reifenleben idealerweise nicht oder nur am Ende des Reifenlebens mit der Fahrbahn in Kontakt kommt. Insbesondere muss die Base auch bei hohen Temperaturen, die durch den Fahrbetreib erreicht werden, eine geringe Hysterese und eine gute Reißfestigkeit aufweisen.

Der vorliegenden Erfindung liegt daher die Aufgabe zugrunde, eine schwefelvernetzte Kautschukmischung bereitzustellen, die eine Optimierung im Hinblick auf den Zielkonflikt aus Rollwiderstand und Reißeigenschaften, insbesondere bei Temperaturen über 80°C, wie sie bei hohen Geschwindigkeiten oder langanhaltenden schnellen Kurvenfahrten auftreten können, aufweist.

Gelöst wird diese Aufgabe durch eine schwefelvernetzte Kautschukmischung, enthaltend wenigstens die folgenden Bestandteile:

- 75 bis 100 phr wenigstens eines natürlichen Polyisoprens,
- 5 bis 15 phf zumindest eines geblockten Mercaptosilans und/oder ungeblockten Mercaptosilans,
- maximal 15 phr Weichmacher,
- 35 bis 90 phr wenigstens einer Kieselsäure,

und wobei der Netzknotenabstand der vernetzten Kautschukmischung 4,7 bis 6,8 nm beträgt, wobei der Netzknotenabstand gemäß dynamischer Differenzkalorimetrie bestimmt wird.

Durch die Kombination der genannten Bestandteile und den Netzknotenabstand von 4,7 bis 6,8 nm weist die erfindungsgemäße schwefelvernetzte Kautschukmischung eine geringe Hysterese und sehr gute Reißeigenschaften, insbesondere bei hohen Temperaturen über 80 °C, auf. Die die erfindungsgemäße schwefelvernetzte Kautschukmischung liegt dabei insgesamt auf einem optimierten Niveau hinsichtlich des genannten Zielkonfliktes.

Ein weiterer Gegenstand der vorliegenden Erfindung ist ein Fahrzeugreifen, der die schwefelvernetzte Kautschukmischung in wenigstens einem Bauteil aufweist.

Der erfindungsgemäße Fahrzeugreifen ist hinsichtlich des Zielkonfliktes aus Rollwiderstand und struktureller Haltbarkeit, insbesondere bei hohen Temperaturen im Fahrbetrieb, optimiert.

Der Fahrzeugreifen kann die schwefelvernetzte Kautschukmischung auch in mehr als einem Bauteil aufweisen.

Bevorzugt weist er die schwefelvernetzte Kautschukmischung wenigstens im Laufstreifen auf. Bei zweigeteilten Laufstreifen (oberer Teil: Cap und unterer Teil: Base) kann die erfindungsgemäße Kautschukmischung sowohl für die Cap als auch für die Base verwendet werden. Bevorzugt weist wenigstens die Base wenigstens eine erfindungsgemäße schwefelvernetzte Kautschukmischung auf. Insbesondere durch die Verwendung der schwefelvernetzten Kautschukmischung in der Base ist der erfindungsgemäße Fahrzeugreifen hinsichtlich des Zielkonfliktes aus Rollwiderstand und struktureller Haltbarkeit, insbesondere bei hohen Temperaturen im Fahrbetrieb, optimiert. Unter "schwefelvernetzter Kautschukmischung" ist eine Kautschukmischung zu verstehen, die aus einer Kautschukfertigmischung (oder Kautschukrohmischung) durch Schwefelvulkanisation hergestellt ist. Eine schwefelvernetzte Kautschukmischung ist somit ein Vulkanisat.

Unter Fahrzeugreifen werden im Rahmen der vorliegenden Erfindung Fahrzeugluftreifen und Vollgummireifen, inklusive Reifen für Industrie- und Baustellenfahrzeuge, LKW-, PKW- sowie Zweiradreifen verstanden.

Die erfindungsgemäße Kautschukmischung ist ferner auch für andere Bauteile von Fahrzeugreifen geeignet, wie z. B. insbesondere dem, Hornprofil, sowie innere Reifenbauteile. Die erfindungsgemäße Kautschukmischung ist ferner auch für andere technische Gummiartikel, wie Bälge, Förderbänder, Luftfedern, Gurte, Riemen oder Schläuche, sowie Schuhsohlen geeignet.

Im Folgenden werden die Bestandteile der erfindungsgemäßen schwefelvernetzten Kautschukmischung näher beschrieben. Sämtliche Ausführungen gelten auch für den erfindungsgemäßen Fahrzeugreifen, der wenigstens eine erfindungsgemäße Kautschukmischung in wenigstens einem Bauteil aufweist. Die Beschreibung der einzelnen Bestandteile bezieht sich auf die Kautschukmischung vor der Vulkanisation, also die schwefelvernetzbare Kautschukmischung, wenn nichts anderes angegeben ist.

Die in dieser Schrift verwendete Angabe phr (parts per hundred parts of rubber by weight) ist dabei die in der Kautschukindustrie übliche Mengenangabe für Mischungsrezepturen. Die Dosierung der Gewichtsteile der einzelnen Substanzen wird in dieser Schrift auf 100 Gewichtsteile der gesamten Masse aller in der Mischung vorhandenen Kautschuke bezogen mit einem Molekulargewicht $M_w$ gemäß GPC von größer als 20000 g/mol.

Die Bestimmung des Gewichtsmittels Mw des Molekulargewichtes erfolgt mittels Gelpermeationschromatographie (GPC mit Tetrahydrofuran (THF) als Elutionsmittel bei 40 °C, Apparat PPS, kalibriert mit Poly-styrol-Standard; Größenausschlußchromatographie; engl. SEC = size exclusion chromatography in Anlehnung an BS ISO 11344:2004).

Im Rahmen der vorliegenden Erfindung wird die Abkürzung Mw für das Gewichtsmittel des Molekulargewichts verwendet.

Die in dieser Schrift verwendete Angabe phf (parts per hundred parts of filler by weight) ist dabei die in der Kautschukindustrie gebräuchliche Mengenangabe für Kupplungsagenzien für Füllstoffe.

Im Rahmen der vorliegenden Anmeldung bezieht sich phf auf die vorhandene Kieselsäure, das heißt, dass andere eventuell vorhandene Füllstoffe wie Ruß nicht in die Berechnung der Silanmenge mit eingehen.

Die erfindungsgemäße Kautschukmischung enthält 75 bis 100 phr, bevorzugt 80 bis 100 phr, wenigstens eines natürlichen Polyisoprens (Naturkautschuk NR).

Hierbei kann es sich um alle dem Fachmann bekannten Typen handeln.

Für den Fall, dass die Kautschukmischung weniger als 100 phr NR enthält, enthält sie wenigstens einen weiteren Dienkautschuk.

Als Dienkautschuke werden Kautschuke bezeichnet, die durch Polymerisation oder Copolymerisation von Dienen und/oder Cycloalkenen entstehen und somit entweder in der Hauptkette oder in den Seitengruppen C=C-Doppelbindungen aufweisen. Bei dem weiteren Dienkautschuk handelt es sich um Polybutadien (Butadien-Kautschuk BR) und/oder Styrol-Butadien-Copolymer (Styrol-Butadien-Kautschuk SBR) und/oder synthetisches Polyisopren (IR) und/oder epoxidiertes Polyisopren (ENR) und/oder Styrol-Isopren-Kautschuk und/oder Halobutyl-Kautschuk und/oder Polynorbornen und/oder Isopren-Isobutylen-Copolymer und/oder Ethylen-Propylen-Dien-Kautschuk und/oder Nitril-Kautschuk und/oder Chloropren-Kautschuk und/oder Acrylat-Kautschuk und/oder Fluor-Kautschuk und/oder Silikon-Kautschuk und/oder Polysulfid-Kautschuk und/oder Epich-lorhydrin-Kautschuk und/oder Styrol-Isopren-Butadien-Terpolymer und/oder hydrierten Acryl-nitrilbutadien-Kautschuk und/oder hydrierten Sty-rol-Butadien-Kautschuk.

Insbesondere Nitrilkautschuk, hydrierter Acrylnitrilbutadi-enkautschuk, Chloroprenkautschuk, Butylkautschuk, Halo-Butylkautschuk oder Ethylen-Propylen-Dien-Kautschuk kommen bei der Herstellung von technischen Gummiartikeln, wie Gurte, Riemen und Schläuche, und/oder Schuhsohlen zum Einsatz.

Bevorzugt handelt es sich bei dem oder den weiteren Dienkautschuk(en) jedoch um Polybutadien (Butadien-Kautschuk) und/oder Styrol-Butadien-Copolymer (Styrol-Butadien-Kautschuk).

Falls in der erfindungsgemäßen Kautschukmischung Butadien-Kautschuk (= BR, Polybutadien) enthalten ist, kann es sich um alle dem Fachmann bekannten Typen handeln. Darunter fallen u.a. die sogenannten high-cis- und low-cis-Typen, wobei Polybutadien mit einem cis-Anteil größer oder gleich 90 Gew.-% als high-cis-Typ und Polybutadien mit einem cis-Anteil kleiner als 90 Gew.-% als low-cis-Typ bezeichnet wird. Ein low-cis-Polybutadien ist z.B. Li-BR (Lithium-katalysierter Butadien-Kautschuk) mit einem cis-Anteil von 20 bis 50 Gew.-%. Mit einem high-cis BR werden besonders gute Eigenschaften sowie eine niedrige Hysterese der Kautschukmischung erzielt.

Das oder die eingesetzte(n) Polybutadiene kann/können mit Modifizierungen und Funktionalisierungen endgruppenmodifiziert und/oder entlang der Polymerketten funktionalisiert sein. Bei der Modifizierung kann es sich um solche mit Hydroxy-Gruppen und/oder Ethoxy-Gruppen und/oder Epoxy-Gruppen und/oder Siloxan-Gruppen und/oder Amino-Gruppen und/oder Aminosiloxan und/oder Carboxy-Gruppen und/oder Phthalocyanin-Gruppen und/oder Silan-Sulfid-Gruppen handeln. Es kommen aber auch weitere, der fachkundigen Person bekannte, Modifizierungen, auch als Funktionalisierungen bezeichnet, in Frage. Bestandteil solcher Funktionalisierungen können Metallatome sein.

Für den Fall, dass wenigstens ein Styrol-Butadien-Kautschuk (Styrol-Butadien-Copolymer) in der Kautschukmischung enthalten ist, kann es sich sowohl um lösungspolymerisierten Styrol-Butadien-Kautschuk (SSBR) als auch um emulsionspolymerisierten Styrol-Butadien-Kautschuk (ESBR) handeln, wobei auch ein Gemisch aus wenigstens einem SSBR und wenigstens einem ESBR eingesetzt werden kann. Die Begriffe "Styrol-Butadien-Kautschuk" und "Sty-rol-Butadien-Copolymer" werden im Rahmen der vorliegenden Erfindung synonym verwendet.

Das eingesetzte Styrol-Butadien-Copolymer kann mit den oben beim Polybutadien genannten Modifizierungen und Funktionalisierungen endgruppenmodifiziert und/oder entlang der Polymerketten funktionalisiert sein.

Gemäß einer besonders vorteilhaften Ausführungsform der Erfindung enthält die Kautschukmischung wenigstens ein Polybutadien (Butadienkautschuk) und zwar bevorzugt in Mengen von 2 bis 25 phr, und gemäß einer besonders vorteilhaften Ausführungsform der Erfindung 10 bis 20 phr. Hiermit werden besonders gute Reißeigenschaften bei geringem Hystereseverlust der erfindungsgemäßen Kautschukmischung erzielt.

Gemäß einer besonders vorteilhaften Ausführungsform der Erfindung enthält die Kautschukmischung wenigstens ein Styrol-Butadien-Kautschuk (SBR) und zwar bevorzugt in Mengen von 2 bis 25 phr, und gemäß einer besonders vorteilhaften Ausführungsform der Erfindung 10 bis 20 phr. Hiermit werden ein geringer Hystereseverlust sowie gute Reißeigenschaften der erfindungsgemäßen Kautschukmischung erzielt.

Bevorzugt ist der SBR hierbei ein SSBR mit einer niedrigen Glasübergangstemperatur $T_g$ gemäß DSC unter -50°C, womit sich optimierte Hysterese-Eigenschaften ergeben.

Die Bestimmung der Glasübergangstemperatur ($T_g$) der Polymere (insbesondere der funktionalisierten Styrol-Butadien-Kautschuke) erfolgt anhand von Dynamischer Differenz-Kalorimetrie (engl. Dynamic Scanning Calorimetry, DSC gemäß DIN 53765: 1994-03 bzw. ISO 11357-2: 1999-03.

Enthält die Kautschukmischung weniger als 75 phr NR, und damit mehr als 25 phr Synthesekautschuk, werden die Reißeigenschaften, insbesondere auch bei hohen Temperaturen verschlechtert.

Erfindungsgemäß enthält die Kautschukmischung 35 bis 90 phr zumindest einer Kieselsäure. Bevorzugt enthält die Kautschukmischung 40 bis 80 phr zumindest einer Kieselsäure.

Gemäß einer besonders bevorzugten Ausführungsform der Erfindung enthält die Kautschukmischung 45 bis 75 phr zumindest einer Kieselsäure.

Die Begriffe "Kieselsäure" und "Silika" werden im Rahmen der vorliegenden Erfindung, wie auch in der Fachwelt üblich, synonym verwendet.

Bei den Kieselsäuren kann es sich um die dem Fachmann bekannten Kieselsäuren, die als Füllstoff für Reifenkautschukmischungen geeignet sind, handeln. Besonders bevorzugt ist es allerdings, wenn eine fein verteilte, gefällte Kieselsäure verwendet wird, die eine Stickstoff-Oberfläche (BET-Oberfläche) (gemäß DIN ISO 9277 und DIN 66132) von 35 bis 400 $m^2/g$, bevorzugt von 35 bis 350 $m^2/g$, besonders bevorzugt von 100 bis 320 $m^2/g$ und ganz besonders bevorzugt von 120 bis 235 $m^2/g$, und eine CTAB-Oberfläche (gemäß ASTM D 3765) von 30 bis 400 $m^2/g$, bevorzugt von 30 bis 330 $m^2/g$, besonders bevorzugt von 100 bis 300 $m^2/g$ und ganz besonders bevorzugt von 110 bis 230 $m^2/g$, aufweist. Derartige Kieselsäuren führen z. B. in Kautschukmischungen für Reifenlaufstreifen zu besonders guten physikalischen Eigenschaften der Vulkanisate. Außerdem können sich dabei Vorteile in der Mischungsverarbeitung durch eine Verringerung der Mischzeit bei gleichbleibenden Produkteigenschaften ergeben, die zu einer verbesserten Produktivität führen. Als Kieselsäuren können somit z. B. sowohl jene des Typs Ultrasil® VN3 (Handelsname) der Firma Evonik als auch hoch dispergierbare Kieselsäuren, so genannte HD-Kieselsäuren (z.B. Zeosil® 1165 MP der Firma Solvay), zum Einsatz kommen.

Gemäß einer bevorzugten Weiterbildung der Erfindung enthält die Kautschukmischung wenigstens 30 phr wenigstens einer Kieselsäure mit einer BET-Oberfläche von 140 bis 180 $m^2/g$. Hierdurch weist die Kautschukmischung besonders gute Rollwiderstandsindikatoren auf.

Besonders bevorzugt enthält die Kautschukmischung hierzu wenigstens 40 phr wenigstens einer Kieselsäure mit einer BET-Oberfläche von 140 bis 180 $m^2/g$.

Die genannten Mengen stellen einen Teil der erfindungsgemäß enthaltenen 35 bis 90 phr wenigstens einer Kieselsäure dar.

Für den Fall, dass verschiedene Kieselsäuren enthalten sind, bezieht sich die Menge von 35 bis 90 phr bzw. die bevorzugten Mengen auf die Gesamtmenge an enthaltenen Kieselsäuren, sofern nichts anderes angegeben ist.

Die erfindungsgemäße Kautschukmischung kann ferner wenigstens einen Ruß in Mengen von 0,1 bis 15 phr, bevorzugt 0,1 bis 10 phr.

Enthält die Kautschukmischung Ruß, sind alle dem Fachmann bekannten Ruß-Typen denkbar. Bevorzugt wird jedoch ein Ruß eingesetzt, der eine Jodadsorptionszahl gemäß ASTM D 1510 von 30 bis 180 g/kg, bevorzugt 30 bis 130 kg/g, und eine DBP-Zahl gemäß ASTM D 2414 von 80 bis 200 ml/100 g, bevorzugt 100 bis 200 ml/100g, besonders bevorzugt 100 bis 180 ml/100g, aufweist.

Hiermit werden für die Anwendung im Fahrzeugreifen besonders gute Rollwiderstandsindikatoren (Rückprallelastizität bei 70 °C) und Reißeigenschaften erzielt.

Die erfindungsgemäße Kautschukmischung ist gemäß einer bevorzugten Ausführungsform frei von Ruß, d.h. sie enthält 0 phr Ruß.

Die erfindungsgemäße Kautschukmischung kann neben Kieselsäure und ggf. Ruß noch weitere bekannte polare und/oder unpolare Füllstoffe, wie Alumosilicate, Kreide, Stärke, Magnesiumoxid, Titandioxid oder Kautschukgele, bevorzugt in Mengen kleiner als 15 phr enthalten.

Weiterhin sind Kohlenstoffnanoröhrchen (carbon nanotubes (CNT) inklusive diskreter CNTs, sogenannte hollow carbon fibers (HCF) und modifizierte CNT enthaltend eine oder mehrere funktionelle Gruppen, wie Hydroxy-, Carboxy und Carbonyl-Gruppen) denkbar. Auch Graphit und Graphene sowie sogenannte "carbon-silica dual-phase filler" sind als Füllstoff denkbar.

Zinkoxid gehört im Rahmen der vorliegenden Erfindung nicht zu den Füllstoffen.

Erfindungsgemäß enthält die Kautschukmischung 5 bis 15 phf, bevorzugt 7 bis 12 phf, zumindest eines geblockten Mercaptosilan und/oder ungeblockten Mercaptosilans. Hierdurch weist die erfindungsgemäße Kautschukmischung im Vergleich zu einer Kautschukmischung mit anderen Silanen verbesserte Reißeigenschaften bei hohen Temperaturen auf.

Die angegebenen Mengen beziehen sich dabei auf die Gesamtmengen der eingesetzten geblockten und ungeblockten Mercaptosilane.

Unter ungeblockten Mercaptosilanen sind Silane zu verstehen, die eine -S-H-Gruppe aufweisen, also ein Wasserstoffatom am Schwefelatom. Unter geblockten Mercaptosilanen sind Silane zu verstehen, die eine -S-SG-Gruppe aufweisen, wobei SG die Abkürzung für eine Schutzgruppe am Schwefelatom ist. Bevorzugte Schutzgruppen sind, wie unten ausgeführt Acylgruppen.

Der Ausdruck "geblocktes und/oder ungeblocktes Mercaptosilan" bedeutet, dass sowohl ein geblocktes, als auch ein ungeblocktes, als auch ein Gemisch aus geblocktem und ungeblocktem Silan in der erfindungsgemäßen Kautschukmischung enthalten sein kann. Dem Fachmann ist klar, dass sich diese Angabe auf den Anfangszustand der Bestandteile der schwefelvernetzbaren Kautschukmischung bezieht und während des Mischvorgangs und/oder der Vulkanisation die Schutzgruppen abgespalten werden und die jeweiligen Schwefelatome chemisch reagieren.

Bevorzugt weist das geblockte Mercaptosilan und/oder ungeblockte Mercaptosilan die allgemeine Summenformel IV) auf:

$$\text{IV)} \quad (R^4)_3\text{Si-Z-S-}R^5 \qquad ,$$

wobei die Reste $R^4$ innerhalb eines Moleküls gleich oder verschieden voneinander sein können und Alkoxy-Gruppen mit 1 bis 10 Kohlenstoffatomen sind, und
wobei $R^5$ eine Acylgruppe mit 1 bis 20 Kohlenstoffatomen oder eine Wasserstoffatom ist, und
wobei Z eine Alkylgruppe mit 1 bis 10 Kohlenstoffatomen ist.

S ist die Abkürzung für Schwefel und Si für Silizium.

Geblockte Mercaptosilane tragen an dem Schwefelatom eine Schutzgruppe, in dem vorliegenden Fall in Formel IV) die Gruppe $R^5$, wodurch sie auch "geschützte Mercaptosilane" genannt werden.

Gemäß einer bevorzugten Ausführungsform der Erfindung handelt es sich bei dem Mercaptosilan um das geblockte Mercaptosilan 3-Octanoylthio-1-propyltriethoxysilan, womit in oben genannter Formel IV) alle Reste $R^4$ Ethoxy (OEt) sind und Z eine Propylgruppe ist und $R^5$ eine Octanoylgruppe ist.

Überraschenderweise ergibt sich aus der Kombination der oben beschriebenen Bestandteile mit einem geblockten Mercaptosilan und/oder ungeblockten Mercaptosilan, bevorzugt geblockten Mercaptosilan, insbesondere 3-Octanoylthio-1-propyltriethoxysilan, ein synergistisches Zusammenwirken hinsichtlich der zu lösenden technischen Aufgabe.

Die erfindungsgemäße Kautschukmischung kann weiterhin andere im Stand der Technik bekannte Silane enthalten, wie TESPD (3,3'-Bis(triethoxysilylpropyl)disulfid) oder TESPT (3,3'-Bis(triethoxysilylpropyl)tetrasulfid) oder Octyltriethoxysilane (z.B. Si208®, Fa. Evonik).

Bevorzugt enthält sie jedoch außer dem Mercaptosilan kein weiteres Silan, d.h. sie ist bevorzugt frei von weiteren Silanen wie TESPD (3,3'-Bis(triethoxysilylpropyl)disulfid) oder TESPT (3,3'-Bis(triethoxysilylpropyl)tetrasulfid) oder Octyltriethoxysilan (z.B. Si208®, Fa. Evonik).

Die erfindungsgemäße Kautschukmischung enthält maximal 15 phr wenigstens eines Weichmachers, wobei die Gesamtmenge an Weichmacher(n), sofern wenigstens ein Weichmacher vorhanden ist, bevorzugt 0,1 bis 10 phr, besonders bevorzugt 0,1 bis 5 phr beträgt. Hierdurch ergibt sich insbesondere in Kombination mit den oben genannten Bestandteilen eine besonders gute Prozessierbarkeit der Kautschukmischung, insbesondere der Extrudate vor der Vernetzung, bei gleichzeitig guten Eigenschaften im Hinblick auf die zu lösende Aufgabe. Bei einer Menge von mehr als 15 phr Weichmacher(n) werden die Reißeigenschaften bei hohen Temperaturen verschlechtert und gleichzeitig sinkt die Härte auf ein nicht akzeptables Niveau ab.

Gemäß einer weiteren bevorzugten Ausführungsform der Erfindung enthält die Kautschukmischung 0 phr Weichmacher.

Zu den im Rahmen der vorliegenden Erfindung verwendeten Weichmachern gehören alle dem Fachmann bekannten Weichmacher wie aromatische, naphthenische oder paraffinische Mineralölweichmacher, wie z.B. MES (mild extraction solvate) oder RAE (Residual Aromatic Extract) oder TDAE (treated distillate aromatic extract), oder Rubberto-Liquid-Öle (RTL) oder Biomass-to-Liquid-Öle (BTL) bevorzugt mit einem Gehalt an polyzyklischen Aromaten von weniger als 3 Gew.-% gemäß Methode IP 346 oder Rapsöl oder insbesondere Harzsäuren oder Faktisse oder Flüssig-Polymere, deren mittleres Molekulargewicht (Bestimmung per GPC = gel permeation chromatography, in Anlehnung an BS ISO 11344:2004) zwischen 500 und 20000 g/mol liegt. Werden in der erfindungsgemäßen Kautschukmischung zusätzliche Flüssig-Polymere als Weichmacher eingesetzt, so gehen diese nicht als Kautschuk in die Berechnung der Zusammensetzung der Polymermatrix ein.

Der Weichmacher ist bevorzugt ausgewählt aus der Gruppe bestehend aus den oben genannten Weichmachern.

Die erfindungsgemäße Kautschukmischung ist schwefelvernetzt, was bedeutet, dass die Vulkanisation der zugrunde liegenden Rohmischung in Anwesenheit von Schwefel und/oder Schwefelspendern mit Hilfe von Vulkanisationsbeschleunigern durchgeführt wird. Einige Vulkanisationsbeschleuniger können zugleich als Schwefelspender wirken. Dabei ist der Beschleuniger bevorzugt ausgewählt aus der Gruppe bestehend aus Thiazolbeschleunigern, Mercaptobeschleunigern, Sulfenamidbeschleunigern, Thiocarbamatbeschleunigern, Thiurambeschleunigern, Thiophosphatbeschleunigern, Thioharnstoffbeschleunigern, Xanthogenat-Beschleunigern und Guanidin-Beschleunigern. Bevorzugt ist die Verwendung eines Sulfenamidbeschleunigers, der ausgewählt ist aus der Gruppe bestehend aus N-Cyclohexyl-2-benzothiazolsufenamid (CBS), N,N-Dicyclohexylbenzothiazol-2-sulfenamid (DCBS), Benzothiazyl-2-sulfenmorpholid (MBS) und N-tert-Butyl-2-benzothiazylsulfenamid (TBBS).

Als schwefelspendende Substanz können dabei alle dem Fachmann bekannten schwefelspendenden Substanzen verwendet werden. Enthält die Kautschukmischung eine schwefelspendende Substanz, ist diese bevorzugt ausgewählt aus der Gruppe enthaltend z.B. Thiuramdisulfide, wie z.B. Tetrabenzylthiuramdisulfid (TBzTD) und/oder Tetramethylthiuramdisulfid (TMTD) und/oder Tetraethylthiuramdisulfid (TETD), und/oder Thiuramtetrasulfide, wie z.B. Dipentamethylenthiuramtetrasulfid (DPTT), und/oder Dithiophosphate, wie z.B.

DipDis (Bis-(Diisopropyl)thiophosphoryldisulfid) und/oder Bis(O,O-2-ethylhexyl-thiophosphoryl)Polysulfid (z. B. Rhenocure SDT 50®, Rheinchemie GmbH) und/oder Zinkdichloryldithiophosphat (z. B. Rhenocure ZDT/S®, Rheinchemie GmbH) und/oder Zinkalkyldithiophosphat, und/oder 1,6-Bis(N,N-dibenzylthiocarbamoyldithio)hexan und/oder Diarylpolysulfide und/oder Dialkylpolysulfide.

Auch weitere netzwerkbildende Systeme, wie sie beispielsweise unter den Handelsnamen Vulkuren®, Duralink® oder Perkalink® erhältlich sind, oder netzwerkbildende Systeme, wie sie in der WO 2010/049216 A2 beschrieben sind, können in der Kautschukmischung eingesetzt werden. Dieses System enthält ein Vulkanisationsmittel, welches mit einer Funktionalität größer vier vernetzt und zumindest einen Vulkanisationsbeschleuniger. Das Vulkanisationsmittel, welches mit einer Funktionalität von größer vier vernetzt hat beispielsweise die allgemeine Formel D):

$$D) \qquad\qquad G[C_aH_{2a}\text{-}CH_2\text{-}S_bY]_c$$

wobei G eine polyvalente cyclische Kohlenwasserstoffgruppe und/oder eine polyvalente Heterokohlenwasserstoffgruppe und/oder eine polyvalente Siloxangruppe ist, die 1 bis 100 Atome enthält; wobei jedes Y unabhängig ausgewählt aus einer kautschukaktiven Gruppe, Schwefel-enthaltende Funktionalitäten enthält; und wobei a, b und c ganze Zahlen sind, für die unabhängig gilt: a gleich 0 bis 6; b gleich 0 bis 8; und c gleich 3 bis 5.

Die kautschukaktive Gruppe ist bevorzugt ausgewählt aus einer Thiosulfonatgruppe, einer Dithiocarbamatgruppe, einer Thiocarbonylgruppe, einer Mercaptogruppe, einer Kohlenwasserstoffgruppe und einer Natriumthiosulfonatgruppe (Bunte-Salzgruppe). Hiermit werden sehr gute Abrieb- und Reißeigenschaften der erfindungsgemäßen Kautschukmischung erzielt.

Besonders bevorzugt ist die Verwendung der Beschleuniger TBBS und/oder CBS und/oder Diphenylguanidin (DPG).

Außerdem können in der Kautschukmischung Vulkanisationsverzögerer vorhanden sein.

Die Begriffe "vulkanisiert" und "vernetzt" werden im Rahmen der vorliegenden Erfindung synonym verwendet.

Erfindungsgemäß beträgt der Netzknotenabstand der vernetzten Kautschukmischung 4,7 bis 6,8 nm. Hierdurch wird in Kombination mit den genannten Bestandteilen eine Optimierung der Reißeigenschaften bei hohen Temperaturen und ein sehr gutes HystereseVerhalten erzielt.

Der Netzknotenabstand der vernetzten Kautschukmischung wird mittels der dynamischen Differenzkalorimetrie, wie unten beschrieben, bestimmt.

Wenn der Netzknotenabstand größer als 6,8 nm ist, werden die Hysterese-Eigenschaften verschlechtert und die Härte sinkt auf ein zu geringes Niveau.

Wenn der Netzknotenabstand kleiner als 4,7 nm ist, verschlechtern sich die Reißeigenschaften bei hohen Temperaturen, insbesondere die Zugfestigkeit bei 100 °C, und liegen dann nicht mehr auf einem ausreichenden Niveau, insbesondere für die Anwendung in der Base eines Fahrzeugreifens.

Der Netzknotenabstand wird insbesondere und bevorzugt durch die Menge an eingesetzten Vulkanisationschemikalien, insbesondere Schwefel und Beschleuniger, eingestellt. Gemäß einer bevorzugten Ausführungsform enthält die Kautschukmischung vor der Vulkanisation hierzu ein Vulkanisationssystem, welches wenigstens einen Sulfenamidbeschleuniger, Diphenylguanidin (DPG) und elementaren Schwefel umfasst, wobei die Gesamtmenge an Sulfenamidbeschleuniger, Diphenylguanidin und elementarem Schwefel 4,5 bis 7,5 phr beträgt.

Die erfindungsgemäße schwefelvernetzte Kautschukmischung basiert somit gemäß einer vorteilhaften Ausführungsform auf einem Vulkanisationssystem, welches wenigstens einen Sulfenamidbeschleuniger, Diphenylguanidin (DPG) und elementaren Schwefel umfasst, wobei die Gesamtmenge an Sulfenamidbeschleuniger, Diphenylguanidin und elementarem Schwefel 4,5 bis 7,5 phr beträgt.

Besonders bevorzugt ist der Sulfenamidbeschleuniger ausgewählt aus der Gruppe bestehend aus N-tert-Butyl-2-benzothiazylsulfenamid (TBBS) und N-Cyclohexyl-2-benzothiazolsufenamid (CBS).

Die erfindungsgemäße Kautschukmischung enthält bevorzugt 0,5 bis 8 phr, besonders bevorzugt 1 bis 5 phr wenigstens eines Klebharzes. Als Klebharze können natürliche oder synthetische Harze, wie Kohlenwasserstoffharze, eingesetzt werden, die als Klebrigmacher wirken. Die Kohlenwasserstoffharze können phenolisch, aromatisch oder aliphatisch sein. Bevorzugt sind die Klebharze ausgewählt aus der Gruppe, bestehend aus Kolophoniumharzen und deren Estern, Terpen-Phenol-Harzen, Alkin-Phenol-Harzen, Phenol-Harzen und Cumaron-Inden-Harzen, wobei Phenol-Harze für die vorliegende Erfindung besonders gut geeignet sind.

Des Weiteren kann die Kautschukmischung übliche Zusatzstoffe in üblichen Gewichtsteilen enthalten, die bei deren Herstellung bevorzugt in wenigstens einer Grundmischstufe zugegeben werden. Zu diesen Zusatzstoffen zählen

a) Alterungsschutzmittel, wie z. B. N-Phenyl-N'-(1,3-dimethylbutyl)-p-phenylendiamin (6PPD), N,N'-Diphenyl-p-phenylendiamin (DPPD), N,N'-Ditolyl-p-phenylendiamin (DTPD), N-Isopropyl-N'-phenyl-p-phenylendiamin (IPPD), 2,2,4-Trimethyl-1,2-dihydrochinolin (TMQ),

b) Aktivatoren, wie z. B. Zinkoxid und Fettsäuren (z. B. Stearinsäure) und/oder sonstige Aktivatoren, wie Zinkkomplexe wie z.B. Zinkethylhexanoat,

c) Wachse,

d) Kohlenwasserstoffharze, die nicht bereits als Weichmacher oder Klebharz umfasst sind,

e) Mastikationshilfsmittel, wie z. B. 2,2'-Dibenzamidodiphenyldisulfid (DBD) und

f) Prozesshilfsmittel, wie insbesondere Fettsäureester und Metallseifen, wie z.B. Zinkseifen und/oder Calciumseifen.

Der Mengenanteil der Gesamtmenge an weiteren Zusatzstoffen beträgt 3 bis 150 phr, bevorzugt 3 bis 100 phr und besonders bevorzugt 5 bis 80 phr.

Im Gesamtmengenanteil der weiteren Zusatzstoffe kann Zinkoxid (ZnO) in den oben genannten Mengen enthalten sein.

Hierbei kann es sich um alle dem Fachmann bekannten Typen an Zinkoxid handeln, wie z.B. ZnO-Granulat oder -Pulver. Das herkömmlicherweise verwendete Zinkoxid weist in der Regel eine BET-Oberfläche von weniger als 10 $m^2$/g auf. Es kann aber auch ein Zinkoxid mit einer BET-Oberfläche von 10 bis 100 $m^2$/g, wie z.B. so genannte "nano-Zinkoxide", verwendet werden.

Die Kautschukmischung kann auch Haftsysteme wie z.B. Cobalt-Salze und Verstärkerhärze (z.b. Resorcin-HMMM/HMT) zum Einsatz in Body-Mischungen, insbesondere Gummierungsmischungen, enthalten.

Außerdem können in der Kautschukmischung Vulkanisationsverzögerer vorhanden sein.

Die Herstellung der erfindungsgemäßen Kautschukmischung erfolgt nach dem in der Kautschukindustrie üblichen Verfahren, bei dem zunächst in ein oder mehreren Mischstufen eine Grundmischung mit allen Bestandteilen außer dem Vulkanisationssystem (Schwefel und vulkanisationsbeeinflussende Substanzen) hergestellt wird. Durch Zugabe des Vulkanisationssystems in einer letzten Mischstufe wird die Fertigmischung erzeugt. Die Fertigmischung wird z.B. durch einen Extrusionsvorgang weiterverarbeitet und in die entsprechende Form gebracht.

Anschließend erfolgt die Weiterverarbeitung durch Vulkanisation, wobei aufgrund des im Rahmen der vorliegenden Erfindung zugegebenen Vulkanisationssystems eine Schwefelvernetzung stattfindet.

Die oben beschriebene erfindungsgemäße Kautschukmischung ist besonders für die Verwendung in Fahrzeugreifen, insbesondere Fahrzeugluftreifen geeignet. Hierbei ist die Anwendung in allen Reifenbauteilen prinzipiell denkbar, insbesondere in einem Laufstreifen, insbesondere in der Base eines Laufstreifens mit Cap/Base-Konstruktion, wie oben bereits beschrieben.

Zur Verwendung in Fahrzeugreifen wird die Mischung als Fertigmischung vor der Vulkanisation bevorzugt in die Form eines Laufstreifens, insbesondere einer Laufstreifenbase, gebracht und bei der Herstellung des Fahrzeugreifenrohlings wie bekannt aufgebracht.

Die Herstellung der erfindungsgemäßen Kautschukmischung zur Verwendung als Seitenwand oder sonstige Body- Mischung in Fahrzeugreifen erfolgt wie bereits beschrieben. Der Unterschied liegt in der Formgebung nach dem Extrusionsvorgang bzw. dem Kalandrieren der Mischung. Die so erhaltenen Formen der noch unvulkanisierten Kautschukmischung für eine oder mehrere unterschiedliche Body-Mischungen dienen dann dem Aufbau eines Reifenrohlings.

Als Body-Mischung werden hierbei die Kautschukmischungen für die inneren Bauteile eines Reifen, wie im Wesentlichen Trennplatte, Innenseele (Innenschicht), Kernprofil, Gürtel, Schulter, Gürtelprofil, Karkasse, Wulstverstärker, Wulstprofil, Hornprofil und Bandage. Zur Verwendung der erfindungsgemäßen Kautschukmischung in Riemen und Gurten, insbesondere in Fördergurten, wird die extrudierte noch unvulkanisierte Mischung in die entsprechende Form gebracht und dabei oder nachher häufig mit Festigkeitsträgern, z.B. synthetische Fasern oder Stahlcorde, versehen. Zumeist ergibt sich so ein mehrlagiger Aufbau, bestehend aus einer und/oder mehrerer Lagen Kautschukmischung, einer und/oder mehrerer Lagen gleicher und/oder verschiedener Festigkeitsträger und einer und/oder mehreren weiteren Lagen dergleichen und/oder einer anderen Kautschukmischung.

Die Erfindung soll nun anhand von Vergleichs- und Ausführungsbeispielen, die in den folgenden Tabellen zusammengefasst sind, näher erläutert werden. Die Vergleichsmischungen sind mit V, die erfindungsgemäßen Mischungen sind mit E gekennzeichnet.

Die Mischungsherstellung erfolgte nach dem in der Kautschukindustrie üblichen Verfahren unter üblichen Bedingungen in zwei Stufen in einem Labormischer mit 300 Milliliter bis 3 Liter Volumen, bei dem zunächst in der ersten Mischstufe (Grundmischstufe) alle Bestandteile außer dem Vulkanisationssystem (Schwefel und vulkanisationsbeeinflussende Substanzen) für 200 bis 600 Sekunden bei 145 bis 175 °C, Zieltemperaturen von 152 bis 167 °C, vermischt wurden. Durch Zugabe des Vulkanisationssystems in der zweiten Stufe (Fertigmischstufe) wurde die Fertigmischung erzeugt, wobei für 180 bis 300 Sekunden bei 90 bis 120 °C gemischt wurde.

Aus sämtlichen Mischungen wurden Prüfkörper durch Vulkanisation nach $t_{95}$ (gemessen am Moving Disc Rheometer gemäß ASTM D 5289-12/ ISO 6502) unter Druck bei 160°C hergestellt und mit diesen Prüfkörpern für die Kautschukindustrie typische Materialeigenschaften mit den im Folgenden angegebenen Testverfahren ermittelt.

- Shore-A-Härte bei Raumtemperatur mittels Durometer gemäß DIN ISO 7619-1
- Rückprallelastizität bei 70°C gemäß DIN 53 512
- Zugfestigkeit bei Raumtemperatur (RT) und 100 °C gemäß DIN 53 504
- Maximaler (max) Verlustfaktor tan δ (tangens delta) aus dynamisch-mechanischer Messung bei 55 °C gemäß DIN 53 513, Dehnungsdurchlauf (engl. "strain sweep")
- Netzknotenabstand gemäß dynamischer Differenzkalorimetrie: Dabei macht man sich zu Nutze, dass der Phasenübergang flüssig-fest eines Quellmittels innerhalb eines gequollenen polymeren Netzwerkes von der Vernetzungsdichte abhängig ist. Proben der jeweiligen Kautschukmischung werden mit Cyclohexan als Quellmittel aufgequollen; dazu wird die jeweilige Probe mit Cyclohexan extrahiert und anschließend bei Raumtemperatur RT zum weiteren quellen stehen gelassen. Anschließend wird die Gefrierpunktsdepression von Cyclohexan im Netzwerk im Vergleich zu der makroskopisch ausgedehnten Flüssigphase bestimmt: Die vorbereitete Probe wird in der Messapparatur abgekühlt und der Wärmefluss aufgenommen. Es ergeben sich zwei Gefrierpeaks, der Peak des reinen Cyclohexans bei ca. 3°C und eine weiterer Peak des in der gequollen Probe befindlichen Cyclohexans. Aus der Temperaturdifferenz berechnet sich der Netzknotenab stand.

Verwendete Substanzen

    a) Kieselsäure: VN3, Fa. Evonik
    b) Weichmacher: MES
    c) Phenol-Harz
    d) NXT-Silan: 3-(Octanoylthio)-1-Propyl-Triethoxysilan, Fa. Momentive
    e) Silangemisch mit 75 Gew.-% $S_2$-Silan: TESPD
    f) Sonstige Zusatzstoffe: Alterungsschutzmittel, Zinkoxid, Stearinsäure
    g) Nd-BR
    h) SLR 3402, Fa. Trinseo, $T_g$ = -62°C
    i) Kieselsäure: RP 200, Fa. Solvay, BET-Oberfläche = 200 m$^2$/g

Wie in den Tabellen 1 bis 3 erkennbar, weisen die erfindungsgemäßen Kautschukmischungen im Vergleich zu den Vergleichsmischungen optimierte Rollwiderstandsindikatoren (tangens delta max. und Rückprallelastizität bei 70 °C) und optimale Reißeigenschaften bei Raumtemperatur und insbesondere auch bei hohen Temperaturen auf, s. Zugfestigkeiten bei RT und 100 °C.

Vergleichsmischungen, die z. B. zwar eine gute Zugfestigkeit bei RT aufweisen, zeigen aber ein zu geringes Niveau bei der Zugfestigkeit bei 100 °C, und damit insbesondere bei der für die Anwendung in der Base von Fahrzeug-greifen wichtigen Eigenschaft, und/oder weisen schlechtere Rollwiderstandsindikatoren und/oder eine zu geringe Härte auf. Das Gleiche gilt entsprechend für Vergleichsmischungen, die bezüglich einer der anderen genannten Eigenschaften ein gutes Niveau aufweisen.

Damit liegen die erfindungsgemäßen Kautschukmischungen auf einem höheren Eigenschaftsniveau hinsichtlich der Rollwiderstandsindikatoren und den Reißeigenschaften bei hohen Temperaturen.

Ein Fahrzeugreifen, der wenigstens eine Kautschukmischung, bevorzugt wenigstens in der Base des Laufstreifens, aufweist, ist hinsichtlich Rollwiderstand und struktureller Haltbarkeit optimiert.

Tabelle 1

| Bestandteile | Einh. | V1 | V2 | E1 | E2 | E3 | V3 | V4 | V5 |
|---|---|---|---|---|---|---|---|---|---|
| NR | phr | 100 | 100 | 100 | 100 | 100 | 100 | 100 | 100 |
| Kieselsre a) | phr | 50 | 50 | 50 | 50 | 50 | 50 | 50 | 50 |
| Öl b) | phr | 2,0 | 2,0 | 2,0 | 2,0 | 2,0 | 2,0 | 2,0 | 2,0 |
| Klebharz c) | phr | 2,0 | 2,0 | 2,0 | 2,0 | 2,0 | 2,0 | 2,0 | 2,0 |
| Silan d) | phf | 10 | 10 | 10 | 10 | 10 | 10 | 10 | - |
| Silan e) | phf | - | - | - | - | - | - | - | 7 |
| Sonst. Zusatzst. f) | phr | 8,5 | 8,5 | 8,5 | 8,5 | 8,5 | 8,5 | 8,5 | 8,5 |
| DPG | phr | 1,0 | 1,0 | 1,0 | 1,0 | 1,0 | 1,0 | 1,0 | 1,0 |
| TBBS | phr | 1,0 | 1,5 | 2,0 | 2,5 | 3,0 | 3,5 | 4,0 | 2,5 |
| Schwefel | phr | 1,0 | 1,5 | 2,0 | 2,5 | 3,0 | 3,5 | 4,0 | 2,5 |
| **Eigenschaften** | | | | | | | | | |
| Netzknotenab stand | nm | 8,6 | 7,1 | 6,4 | 5,7 | 4,9 | 4,5 | 4,2 | 5,5 |
| Härte RT | Sh A | 45,2 | 52,2 | 57,2 | 59,1 | 61,8 | 63,3 | 63 | 61,2 |
| Rückpr. 70 °C | % | 60,4 | 66,8 | 69,4 | 72,9 | 72,4 | 74,1 | 74,3 | 71,4 |
| Zugf. RT | MPa | 17,2 | 22,9 | 23 | 21 | 23,6 | 20,6 | 17,6 | 24,6 |
| Zugf. 100 °C | MPa | 17,3 | 15,3 | 10,1 | 10,3 | 9,1 | 6,3 | 4,8 | 8,2 |
| Tan d max | | 0,109 | 0,08 | 0,068 | 0,064 | 0,065 | 0,066 | 0,059 | 0,068 |

Tabelle 2

| Bestandteile | Einh. | E4 | E5 | E6 | E7 | V6 | E8 | E9 | E10 |
|---|---|---|---|---|---|---|---|---|---|
| NR | phr | 100 | 100 | 100 | 100 | 100 | 90 | 80 | 80 |
| BR g) | phr | - | - | - | - | - | 10 | 20 | - |
| SSBR h) | phr | - | - | - | - | - | - | - | 20 |
| Kieselsre a) | phr | 70 | 50 | 50 | 50 | 50 | 50 | 50 | 50 |
| Öl b) | phr | 2,0 | 4,0 | 5,25 | 10,25 | 20,25 | 2,0 | 2,0 | 2,0 |
| Klebharz c) | phr | 2,0 | - | 2,0 | 2,0 | 2,0 | 2,0 | 2,0 | 2,0 |
| Silan d) | phf | 10 | 10 | 10 | 10 | 10 | 10 | 10 | 10 |
| Sonst. Zusatzst. f) | phr | 8,5 | 8,5 | 8,5 | 8,5 | 8,5 | 8,5 | 8,5 | 8,5 |
| DPG | phr | 1,0 | 1,0 | 1,0 | 1,0 | 1,0 | 1,0 | 1,0 | 1,0 |
| TBBS | phr | 2,5 | 2,5 | 2,5 | 2,5 | 2,5 | 2,5 | 2,5 | 2,5 |
| Schwefel | phr | 2,5 | 2,5 | 2,5 | 2,5 | 2,5 | 2,5 | 2,5 | 2,5 |
| **Eigenschaften** | | | | | | | | | |
| Netzknotenab stand | nm | 6,7 | 5,8 | 5,9 | 6,2 | 7,1 | 5,7 | 5,3 | 5,1 |
| Härte RT | Sh A | 69,3 | 57,8 | 57,8 | 54,7 | 48 | 59,6 | 61,2 | 61 |
| Rückpr. 70 °C | % | 59,9 | 75,3 | 73,4 | 73,6 | 74,1 | 73,1 | 73,1 | 74,9 |
| Zugf. RT | MPa | 24,3 | 22,8 | 20,2 | 23,8 | 20,5 | 23,3 | 19,7 | 20,2 |

(fortgesetzt)

| Eigenschaften | | | | | | | | |
|---|---|---|---|---|---|---|---|---|
| Zugf. 100 °C | MPa | 17,5 | 9,1 | 9,9 | 12,2 | 8,1 | 10,3 | 9,3 | 9 |
| Tan d max | | 0,107 | 0,056 | 0,065 | 0,061 | 0,056 | 0,063 | 0,063 | 0,057 |

Tabelle 3

| Bestandteile | Einh. | V7 | V8 | V9 | V10 | E11 | E12 | V11 |
|---|---|---|---|---|---|---|---|---|
| NR | phr | 70 | 60 | 80 | 60 | 100 | 100 | 100 |
| BR g) | phr | 30 | - | 20 | 40 | - | - | - |
| SSBR h) | phr | - | 40 | - | - | - | - | - |
| Ruß N339 | phr | - | - | - | - | - | 10 | 20 |
| Kieselsre a) | phr | 50 | 50 | 50 | 50 | - | 40 | 30 |
| Kieselsre i) | phr | - | - | - | - | 50 | - | - |
| Öl b) | phr | 2,0 | 2,0 | 2,0 | 2,0 | 20,25 | 2,0 | 2,0 |
| Klebharz c) | phr | 2,0 | 2,0 | 2,0 | 2,0 | 2,0 | 2,0 | 2,0 |
| Silan d) | phf | 10 | 10 | 10 | 10 | 10 | 10 | 10 |
| Sonst. Zusatzst. f) | phr | 8,5 | 8,5 | 8,5 | 8,5 | 8,5 | 8,5 | 8,5 |
| DPG | phr | 1,0 | 1,0 | 1,0 | 1,0 | 1,0 | 1,0 | 1,0 |
| TBBS | phr | 2,5 | 2,5 | 3,5 | 3,5 | 2,5 | 2,5 | 2,5 |
| Schwefel | phr | 2,5 | 2,5 | 3,5 | 3,5 | 2,5 | 2,5 | 2,5 |
| **Eigenschaften** | | | | | | | | |
| Netzknotenab stand | nm | 5 | 5 | 4,1 | 4,1 | 5,7 | 5,5 | 5,1 |
| Härte RT | Sh A | 64,5 | 61,8 | 66 | 68,8 | 60,6 | 59 | 60,8 |
| Rückpr. 70 °C | % | 71,4 | 76,4 | 76,1 | 76,2 | 69,8 | 72,6 | 71,5 |
| Zugf. RT | MPa | 14,1 | 11 | 16,5 | 12,4 | 25,1 | 24 | 22,9 |
| Zugf. 100 °C | MPa | 7,8 | 5,3 | 7,5 | 5,8 | 12 | 10,5 | 8,4 |
| Tan d max | | 0,072 | 0,054 | 0,063 | 0,066 | 0,074 | 0,071 | 0,075 |

**Patentansprüche**

1. Schwefel vernetzte Kautschukmischung, enthaltend wenigstens die folgenden Bestandteile:

   - 75 bis 100 phr wenigstens eines natürlichen Polyisoprens,
   - 5 bis 15 phf zumindest eines geblockten Mercaptosilans und/oder ungeblockten Mercaptosilans,
   - maximal 15 phr Weichmacher,
   - 35 bis 90 phr wenigstens einer Kieselsäure,

   und wobei der Netzknotenabstand der vernetzten Kautschukmischung 4,7 bis 6,8 nm beträgt, wobei der Netzknotenabstand gemäß dynamischer Differenzkalorimetrie bestimmt wird.

2. Schwefel vernetzte Kautschukmischung nach Anspruch 1, **dadurch gekennzeichnet, dass** sie weniger als 15 phr Ruß enthält.

3. Schwefel vernetzte Kautschukmischung nach einem der vorherigen Ansprüche, **dadurch gekennzeichnet, dass** sie wenigstens ein Klebharz enthält.

4. Schwefel vernetzte Kautschukmischung nach Anspruch 3, **dadurch gekennzeichnet, dass** die Menge an enthaltenen Klebharzen 0,5 bis 8 phr beträgt.

5. Schwefel vernetzte Kautschukmischung nach einem der vorherigen Ansprüche, **dadurch gekennzeichnet, dass** sie wenigstens 30 phr wenigstens einer Kieselsäure mit einer BET-Oberfläche von 140 bis 180 $m^2/g$ enthält.

6. Schwefel vernetzte Kautschukmischung nach einem der vorherigen Ansprüche, **dadurch gekennzeichnet, dass** sie auf einem Vulkanisationssystem basiert, welches wenigstens einen Sulfenamidbeschleuniger, Diphenylguanidin (DPG) und elementaren Schwefel umfasst, wobei die Gesamtmenge an Sulfenamidbeschleuniger, Diphenylguanidin und elementarem Schwefel 4,5 bis 7,5 phr beträgt.

7. Schwefel vernetzte Kautschukmischung nach Anspruch 6, **dadurch gekennzeichnet, dass** der Sulfenamidbeschleuniger ausgewählt ist aus der Gruppe bestehend aus N-tert-Butyl-2-benzothiazylsulfenamid (TBBS) und N-Cyclohexyl-2-benzothiazolsufenamid (CBS).

8. Schwefel vernetzte Kautschukmischung nach einem der vorherigen Ansprüche, **dadurch gekennzeichnet, dass** sie maximal 10 phr Weichmacher enthält.

9. Schwefel vernetzte Kautschukmischung nach einem der vorherigen Ansprüche, **dadurch gekennzeichnet, dass** sie 45 bis 75 phr wenigstens einer Kieselsäure enthält.

10. Fahrzeugreifen, der die schwefelvernetzte Kautschukmischung nach einem der vorherigen Ansprüche wenigstens in einem Bauteil aufweist.

11. Fahrzeugreifen nach Anspruch 10, **dadurch gekennzeichnet, dass** es sich bei dem Bauteil zumindest um den Laufstreifen, insbesondere die Base des Laufstreifens, handelt.

**Claims**

1. Sulfur-crosslinked rubber mixture containing at least the following constituents:

   - 75 to 100 phr of at least one natural polyisoprene,
   - 5 to 15 phf of at least one blocked mercaptosilane and/or unblocked mercaptosilane,
   - at most 15 phr of plasticizer,
   - 35 to 90 phr of at least one silica,

   and wherein the network node spacing of the crosslinked rubber mixture is 4.7 to 6.8 nm, wherein the network node spacing is determined by differential scanning calorimetry.

2. Sulfur-crosslinked rubber mixture according to Claim 1, **characterized in that** it contains less than 15 phr of carbon black.

3. Sulfur-crosslinked rubber mixture according to either of the preceding claims, **characterized in that** it contains at least one tackifier resin.

4. Sulfur-crosslinked rubber mixture according to Claim 3, **characterized in that** the amount of tackifier resins present is 0.5 to 8 phr.

5. Sulfur-crosslinked rubber mixture according to any of the preceding claims, **characterized in that** it contains at least 30 phr of at least one silica having a BET surface area of 140 to 180 $m^2/g$.

6. Sulfur-crosslinked rubber mixture according to any of the preceding claims, **characterized in that** it is based on a vulcanization system comprising at least one sulfenamide accelerator, diphenylguanidine (DPG) and elemental sulfur, wherein the total amount of sulfenamide accelerator, diphenylguanidine and elemental sulfur is 4.5 to 7.5 phr.

7. Sulfur-crosslinked rubber mixture according to Claim 6, **characterized in that** the sulfenamide accelerator is selected from the group consisting of N-tert-butyl-2-benzothiazylsulfenamide (TBBS) and N-cyclohexyl-2-benzothiazolesufenamide (CBS).

8. Sulfur-crosslinked rubber mixture according to any of the preceding claims, **characterized in that** it contains at most 10 phr of plasticizer.

9. Sulfur-crosslinked rubber mixture according to any of the preceding claims, **characterized in that** it contains 45 to 75 phr of at least one silica.

10. Vehicle tire comprising the sulfur-crosslinked rubber mixture according to any of the preceding claims at least in one component.

11. Vehicle tire according to Claim 10, **characterized in that** the component is at least the tread, in particular the base of the tread.

**Revendications**

1. Mélange de caoutchouc réticulé au soufre, contenant au moins les constituants suivants :

   - 75 à 100 phr d'au moins un polyisoprène naturel,
   - 5 à 15 phf d'au moins un mercaptosilane bloqué et/ou mercaptosilane non bloqué,
   - au maximum 15 phr de plastifiant,
   - 35 à 90 phr d'au moins une silice,

   et dans lequel la distance entre noeuds de réseau du mélange de caoutchouc réticulé vaut de 4,7 à 6,8 nm, la diistance entre noeuds de réseau étant déterminée d'après calorimétrie différentielle dynamique.

2. Mélange de caoutchouc réticulé au soufre selon la revendication 1, **caractérisé en ce qu'**il contient moins de 15 phr de noir de carbone.

3. Mélange de caoutchouc réticulé au soufre selon l'une quelconque des revendications précédentes, **caractérisé en ce qu'**il ceontient au moins une résine adhésive.

4. Mélange de caoutchouc réticulé au soufre selon la revendication 3, **caractérisé en ce que** la quantité de résines adhésives contenues vaut de 0,5 à 8 phr.

5. Mélange de caoutchouc réticulé au soufre selon l'une quelconque des revendications précédentes, **caractérisé en ce qu'**il contient au moins 30 phr d'au moins une silice ayant une surface BET de 140 à 180 m$^2$/g.

6. Mélange de caoutchouc réticulé au soufre selon l'une quelconque des revendications précédentes, **caractérisé en ce qu'**il est à base d"un système de vulcanisation qui comprend au moins un accélérateur sulfénamide, de la diphénylguanidine (DPG) et du soufre élémentaire, la quantité totale d'accélérateur sulfénamide, diphénylguanidine et soufre élémentaire valant de 4,5 à 7,5 phr.

7. Mélange de caoutchouc réticulé au soufre selon la revendication 6, **caractérisé en ce que** l'accélérateur sulfénamide est choisi dans le groupe constitué pat le N-tert-butyl-2-benzothiazylsulfénamide (TBBS) et le N-cyclohexyl-2-benzothiazole-sulfénamide (CBS).

8. Mélange de caoutchouc réticulé au soufre selon l'une quelconque des revendications précédentes, **caractérisé en ce qu'**il contient au maximum 10 phr de plastifiant.

9. Mélange de caoutchouc réticulé au soufre selon l'une quelconque des revendications précédentes, **caractérisé en ce qu'**il contient 45 à 75 phr d'au moins une silice.

10. Pneumatiique de véhicule, qui comporte au moins dans un composant le mélange de caoutchouc réticulé au soufre selon l'une quelconque des revendications précédentes.

**11.** Pneumatique de véhicule selon la revendication 10, **caractérisé en ce que** pour ce qui est du composant il s'agit au moins de la bande de roulement, en particulier de la base de la bande de roulement.

**EP 3 428 225 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2010049216 A2